(19) Europäisches Patentamt
European Patent Office
Office européen des brevets

(11) EP 3 913 118 B1

(12) **EUROPEAN PATENT SPECIFICATION**

(45) Date of publication and mention of the grant of the patent:
**22.05.2024 Bulletin 2024/21**

(21) Application number: **20763873.5**

(22) Date of filing: **17.02.2020**

(51) International Patent Classification (IPC):
***D01F 6/62*** *(2006.01)* ***D02J 1/22*** *(2006.01)*

(52) Cooperative Patent Classification (CPC):
**D02J 13/006; D01F 6/62; D02J 1/22; D02J 11/00; D02J 13/00**

(86) International application number:
**PCT/JP2020/006104**

(87) International publication number:
**WO 2020/175216 (03.09.2020 Gazette 2020/36)**

(54) **LIQUID CRYSTAL POLYESTER MULTI-FILAMENT AND METHOD FOR MANUFACTURING SAME**

FLÜSSIGKRISTALLPOLYESTER-MULTIFILAMENT UND VERFAHREN ZUR HERSTELLUNG DAVON

MULTIFILAMENT DE POLYESTER À CRISTAUX LIQUIDES ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2019 JP 2019033067**

(43) Date of publication of application:
**24.11.2021 Bulletin 2021/47**

(73) Proprietor: **Kuraray Co., Ltd.**
**Kurashiki-shi, Okayama 710-0801 (JP)**

(72) Inventors:
- **IKEHATA, Keiichi**
**Kurashiki-shi, Okayama 713-8550 (JP)**
- **IDE, Junya**
**Kurashiki-shi, Okayama 713-8550 (JP)**

(74) Representative: **Müller-Boré & Partner Patentanwälte PartG mbB**
**Friedenheimer Brücke 21**
**80639 München (DE)**

(56) References cited:
**JP-A- H03 260 114**
**JP-A- S57 159 816**
**JP-A- S58 502 227**
**JP-A- S59 204 908**
**JP-A- S60 239 512**
**JP-A- 2016 191 179**
**JP-A- 2017 179 647**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

**Description**

TECHNICAL FIELD

The present invention relates to a liquid crystal polyester multifilament and a method for manufacturing the same.

BACKGROUND ART

A liquid crystal polyester multifilament is a bundle of filaments with high mechanical properties (high tensile strength, low elongation, and high modulus of elasticity) derived from a molecular structure containing rigid molecular chains highly oriented. For this reason, such a liquid crystal polyester multifilament is used for purposes that require high tensile strength and high modulus of elasticity (a small amount of dimensional change resulting from the load). Examples of use of such a liquid crystal polyester multifilament include highly processed products, such as tension members (cords and other components for various electrical appliances, such as electric wires, optical fibers, heater wire core yarns, and earphone cords), sailcloth, ropes, climbing ropes, field nets, life ropes, fishing lines, fishing nets, and longlines.

If a multifilament used for these purposes locally has a portion with low mechanical properties (tensile strength, modulus of elasticity) even while having high average mechanical properties, the resultant highly processed product unfortunately has low mechanical properties as a whole. Thus, what is important is that such a multifilament should have not only high average mechanical properties but also high minimum mechanical properties, i.e., a small variation in mechanical properties.

For example, Patent Document 1 (Japanese Unexamined Patent Publication No. 2016-176161) describes a known technique relating to how to reduce the variation in mechanical properties of a liquid crystal polyester multifilament. This document describes a process in which a multistage and slow temperature rise that is set as a condition of a temperature rise for solid phase polymerization reduces fusion between single filaments to reduce the variation in tensile strength and elongation.

Patent document 2 (JP 2017 179647) discloses liquid crystal polyester multifilaments having a tensile strength of more than 18 cN/dtex, prepared by a method comprising a heat treatment step.

CITATION LIST

PATENT DOCUMENTS

PATENT DOCUMENT 1: Japanese Unexamined Patent Publication No. 2016-176161

PATENT DOCUMENT 2: JP 2017 179647

SUMMARY OF THE INVENTION

TECHNICAL PROBLEM

Here, in particular, a small variation in the initial modulus of each of multifilaments reduces the slack in the multifilaments that are combined together while being aligned to produce a highly processed product, such as a tension member, and enables production of a dense, highly processed product with only small voids between the multifilaments. This reduces the variation in mechanical properties of the resultant highly processed product to a low level. In other words, what is important to produce a compact, highly processed product having stable quality and a high ratio of utilization of mechanical properties is a small variation in the initial modulus of each multifilament.

The solid phase polymerization in the process described in Patent Document 1 is performed by a batch method, which is unsuitable for obtaining a multifilament with uniform mechanical properties for the following two reasons.

One of the reasons is that when solid phase polymerization is to be performed by the batch method, the difference between inner and outer layers of a bobbin package or the difference between positions in the width direction causes the heat treatment environment to be nonuniform along the filament length.

The other reason is that single filaments forming a multifilament are not partly parallel, and are partly loose.

If solid phase polymerization is performed by a batch method with a multifilament wound around a bobbin to form a package as described in Patent Document 1, the difference in path length between inner and outer single filaments forming the multifilament results from end portions of these single filaments folded back in a winding step. Thus, all of

the single filaments are not aligned parallel to one another. As a result, some of the single filaments are partly loose.

A liquid crystal polyester multifilament produced by a known melt spinning method has loose portions in a yarn winding step for the same reason as described above. In a process that allows the bobbin package of the multifilament with these loose portions to undergo solid phase polymerization, fusion between the single filaments generally occurring during the solid phase polymerization of the liquid crystal polyester multifilament causes these loose portions to be fused into place through the solid phase polymerization. Thus, poorly aligned ones of the single filaments of the multifilament remain even after the solid phase polymerization process.

What is important to reduce the variation in the initial modulus of a multifilament is that single filaments forming the multifilament should be aligned parallel to one another without being loosened across the filament length. Thus, even if the process described in Patent Document 1 successfully reduces the variation in tensile strength and the variation in elongation, loose portions of some of filaments, which cause the initial modulus of the multifilament to vary, cannot be reduced.

As can be seen from the foregoing description, what is important to reduce the variation in the initial modulus of the multifilament is that the multifilament should undergo heat treatment in a uniform environment across the filament length, and that slack in the multifilament produced in a manufacturing process should be eliminated during the heat treatment.

In Patent Document 1, the variation in modulus of elasticity can be approximately calculated based on the tensile strength range estimated from the variation in tensile strength and the elongation range estimated from the variation in elongation. However, this modulus of elasticity represents the average modulus of elasticity of the multifilament that is yet to be broken, and is not always equal to the initial modulus to which importance is attached in industrial material applications (the modulus of elasticity of a region of the multifilament with a low ratio of an elongation percentage to an elongation at break. The initial modulus as used herein refers to the gradient of the straight line passing through two points respectively indicating elongation percentages of 0.25% and 1.00%). In addition, what is important to reduce the variation in modulus of elasticity of the multifilament that is yet to be broken is that defects should appear at ends or any other portions of molecules in each filament with equal frequency. However, what is important to reduce the variation in initial modulus is that the convergence and parallelism of filaments should be increased as will be described below. This reduction in the initial modulus variation requires a different countermeasure also from the viewpoint of fibrous structure.

To eliminate the slack, a known aligning process, such as micro-drawing, may be performed after solid phase polymerization using a known process preventing fusion as described in, for example, Japanese Unexamined Patent Publication No. S62-45726. Unfortunately, this method causes an antifusion agent to damage yarns in a later step, and requires an additional rewinding step after the solid phase polymerization. This increases the numbers of rollers and guides through which a multifilament passes. Thus, abrasion and any other factors cause degradation in the mechanical properties and quality of the multifilament.

The present invention was made in view of the problems described above. It is an object of the present invention to provide a liquid crystal polyester multifilament with a small variation in initial modulus and a method for manufacturing the same.

## SOLUTION TO THE PROBLEM

The present inventors have conducted intensive studies to solve the above-described problems and have completed the present invention. Specifically, the present invention is disclosed in the appended claims.

## ADVANTAGES OF THE INVENTION

The present invention can provide a high-tensile-strength liquid crystal polyester multifilament which can be suitably used for a highly processed product, such as a tension member, and which has a small initial modulus variation.

A highly processed product according to the present invention is a processed product that includes a multifilament processed by at least one of twisting, knitting, opening, weaving, coating, resin impregnation, combination of a liquid crystal polyester multifilament with other filaments, or any other method, and includes a liquid crystal polyester multifilament. Examples of the highly processed product include tension members (cords and other components for various electrical appliances, such as electric wires, optical fibers, heater wire core yarns, and earphone cords), sailcloth, ropes, climbing ropes, field nets, life ropes, fishing lines, fishing nets, and longlines, although the type of the product should not be specifically limited.

## BRIEF DESCRIPTION OF THE DRAWINGS

FIG. 1 is a schematic view for explaining a transfer and heat treatment step performed by a roll-to-roll process in each of Examples 1 to 5 and Comparative Example 2.

FIG. 2 is a schematic view for explaining a transfer and heat treatment step performed by a roll-to-roll process in Example 6.

FIG. 3 is a schematic view for explaining a transfer and heat treatment step performed by a roll-to-roll process in Example 7.

DESCRIPTION OF EMBODIMENTS

A liquid crystal polyester multifilament and a method for manufacturing the same according to the present invention will now be described in detail.

It is important that the liquid crystal polyester multifilament of the present invention should have a small variation in initial modulus in order to improve the mechanical properties of a highly processed product as a whole. The variation in initial modulus of the liquid crystal polyester multifilament of the present invention is 3.0% or less. The variation in initial modulus is preferably 2.5% or less, and more preferably 2.0% or less. The lower limit of the variation in initial modulus should not be specifically limited. However, the lower limit that can be achieved by the present invention is about 0.1%.

To increase the dimensional stability (achieve a small dimensional change resulting from the load), the liquid crystal polyester multifilament of the present invention has an initial modulus of preferably 100 cN/dtex or more. The initial modulus is more preferably 300 cN/dtex or more, and still more preferably 500 cN/dtex or more. The upper limit of the initial modulus should not be specifically limited. However, the upper limit that can be achieved by the present invention is about 1000 cN/dtex.

The initial modulus and the variation in initial modulus are calculated through the measuring method described in the examples below.

It is important that the liquid crystalline polyester multifilament of the present invention should have high tensile strength. "High tensile strength" of the multifilament of the present invention means that the tensile strength of the multifilament that has undergone heat treatment is 18 cN/dtex or more. The tensile strength of the multifilament of the present invention is preferably 20 cN/dtex or more, and more preferably 23 cN/dtex or more. The upper limit of the tensile strength should not be specifically limited. However, the upper limit that can be achieved by the present invention is about 30 cN/dtex.

To improve the mechanical properties of the highly processed product as a whole, the liquid crystal polyester multifilament of the present invention has a variation in tensile strength of preferably 3.0% or less. The variation in tensile strength is more preferably 2.5% or less, and still more preferably 2.0% or less. The lower limit of the variation in tensile strength should not be specifically limited. However, the lower limit that can be achieved by the present invention is about 0.1%.

The tensile strength and the variation in tensile strength are calculated through the measuring method described in the examples below.

The liquid crystal polyester multifilament of the present invention can be obtained by melt-spinning of a liquid crystal polyester. The liquid crystal polyester contains repeating structural units derived from, for example, an aromatic diol, an aromatic dicarboxylic acid, or an aromatic hydroxycarboxylic acid. The chemical structure of the repeating structural units derived from an aromatic diol, an aromatic dicarboxylic acid, or an aromatic hydroxycarboxylic acid does not have any particular limitations as long as it does not impede the effects of the present invention. The liquid crystal polyester may also contain a structural unit derived from an aromatic diamine, an aromatic hydroxyamine or an aromatic aminocarboxylic acid within a range that does not impede the effects of the present invention. Examples of preferred structural units are provided in Table 1.

[Table 1]

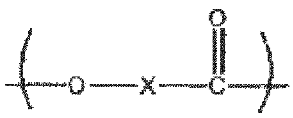
,
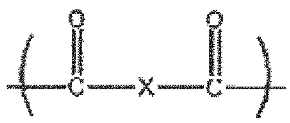
,
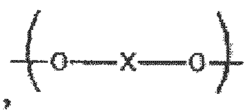
,
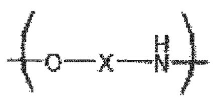

(where X is selected from the following structures.)

(continued)

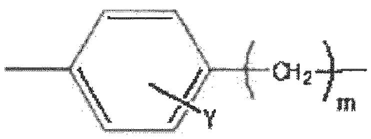,
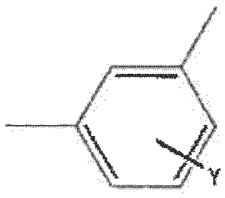,
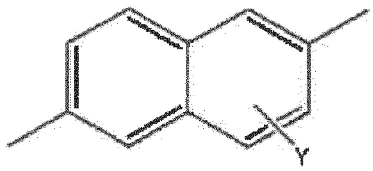,

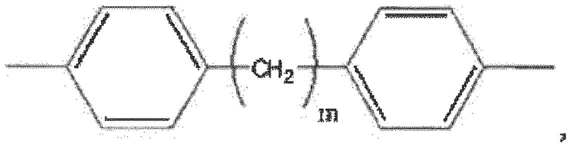,
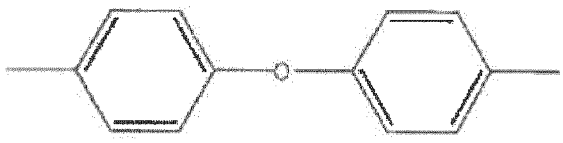,

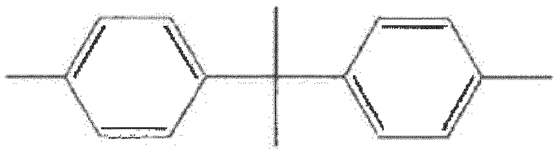,
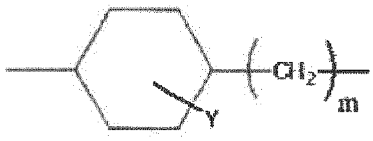,
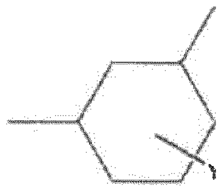

(where m = 0 to 2, and Y is a substituent selected from hydrogen, a halogen atom, an alkyl group, an aryl group, an aralkyl group, an alkoxy group, an aryloxy group, and an aralkyloxy group.)

In the structural units in Table 1, m is an integer from 0 to 2, and Y in the formula may be, independently, a hydrogen atom, a halogen atom (for example, a fluorine atom, a chlorine atom, a bromine atom or an iodine atom), an alkyl group (for example, alkyl groups having carbon atomic numbers 1 to 4 such as a methyl group, an ethyl group, an isopropyl group, or a t-butyl group), an alkoxy group (for example, a methoxy group, an ethoxy group, an isopropoxy group or an n-butoxy group), an aryl group (for example, a phenyl group, and a naphthyl group), an aralkyl group (for example, a benzyl group (a phenylmethyl group) or a phenethyl group (a phenylethyl group)), an aryloxy group (for example, a phenoxyl group), or an alkyloxy group (for example, a benzyloxy group) within a range from one to the maximum number that is substitutable.

Examples of more preferable structural units are described in examples (1) to (18) that are shown in Table 2, Table 3, and Table 4. When the structural unit in the formula is one that is capable of exhibiting a plurality of structures, two or more types of such structural units may be combined as a structural unit constituting a polymer.

[Table 2]

(1) 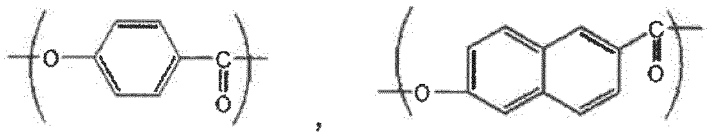

(2) 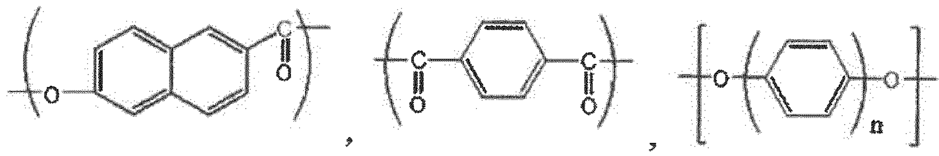

(3) 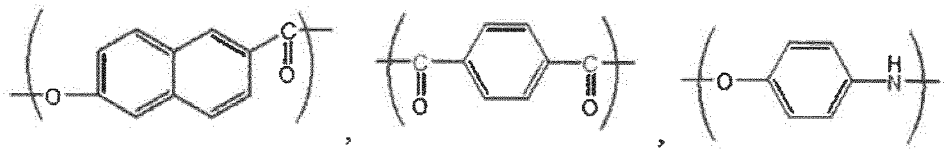

(4) 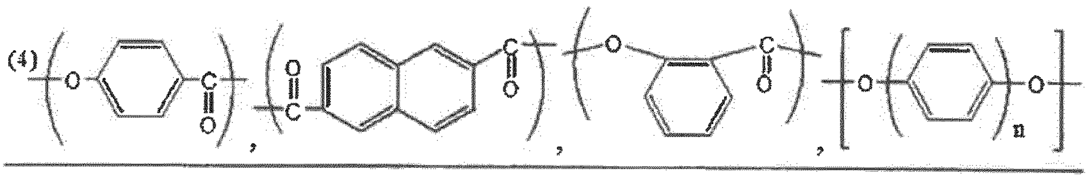

(5) 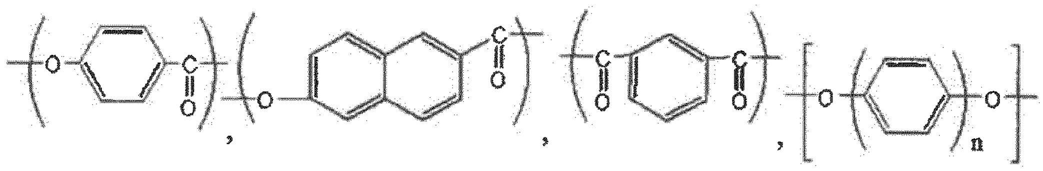

(6) 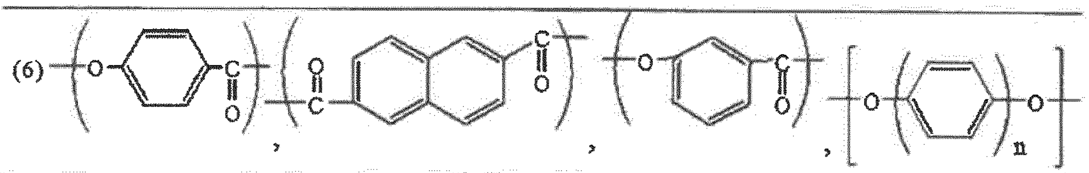

(7) 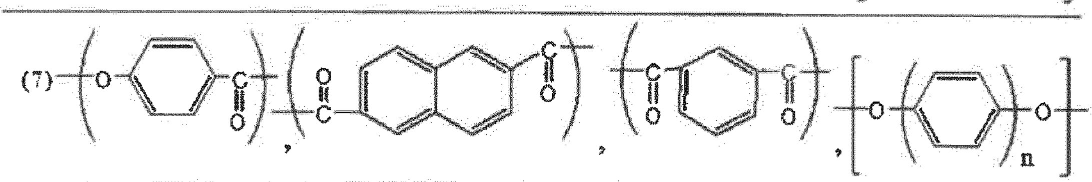

(8) 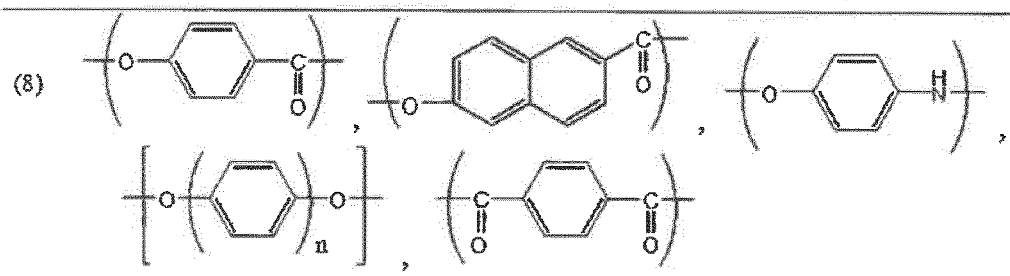

[Table 3]

| | |
|---|---|
| (9) | 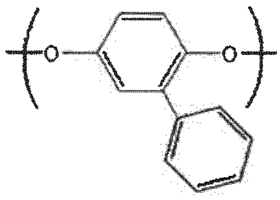 , 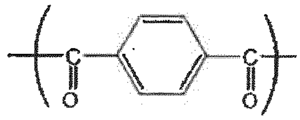 |
| (10) | 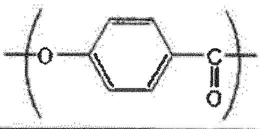 , 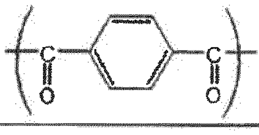 , 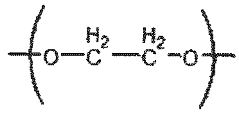 |
| (11) | 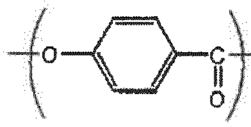 , 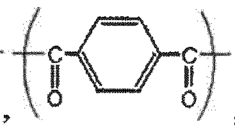 , 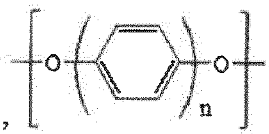 , 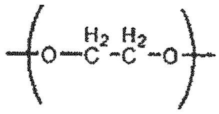 |
| (12) | 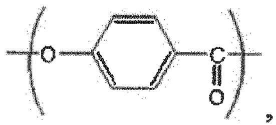 , 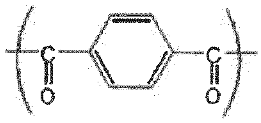 , 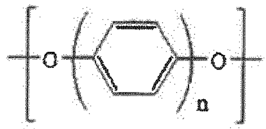 |
| (13) | 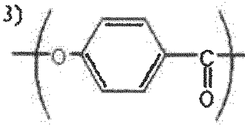 , 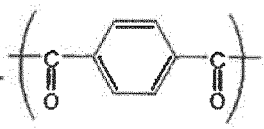 , 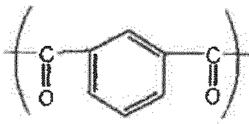 , 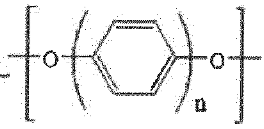 |
| (14) | 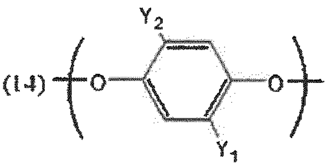 , 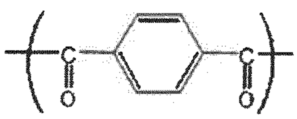 , 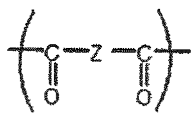 |
| (15) | 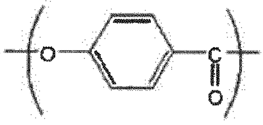 , 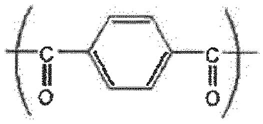 , 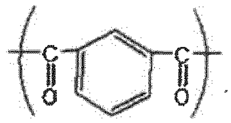 , 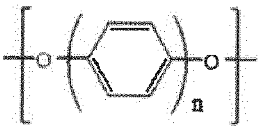 , 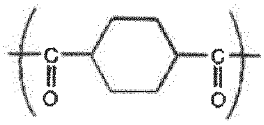 |

[Table 4]

| | |
|---|---|
| (16) | 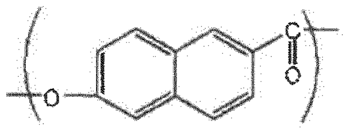 , 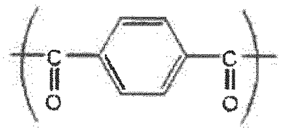 , 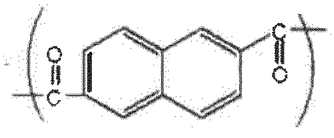 , 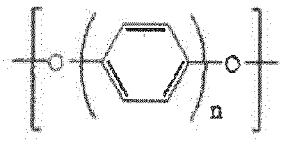 |
| (17) | 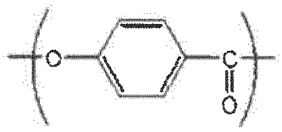 , 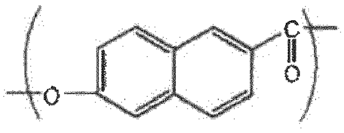 , 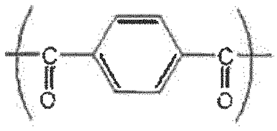 , 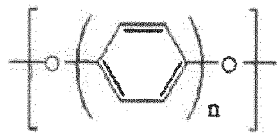 |
| (18) | 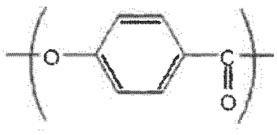 , 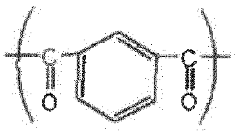 , 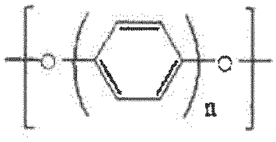 |

In the structural units of Table 2, Table 3 and Table 4, n is an integer of one or two, and each of the structural units of n = 1 and n = 2 may either be alone or combined with another. Y1 and Y2 may be, independently, a hydrogen atom, a halogen atom (for example, a fluorine atom, a chlorine atom, a bromine atom or an iodine atom), an alkyl group (for example, alkyl groups having carbon atomic numbers 1 to 4 such as a methyl group, an ethyl group, an isopropyl group, or a t-butyl group), an alkoxy group (for example, a methoxy group, an ethoxy group, an isopropoxy group or an n-butoxy group), an aryl group (for example, a phenyl group, and a naphthyl group), an aralkyl group (for example, a benzyl group (a phenylmethyl group) or a phenethyl group (a phenylethyl group)), an aryloxy group (for example, a phenoxyl group), or an aralkyloxy group (for example, a benzyloxy group). Among these options, a hydrogen atom, a chlorine atom, a bromine atom, or a methyl group is preferable.

Further, Z may be a substituent represented by the following formula.

[Chemical Formula 1]

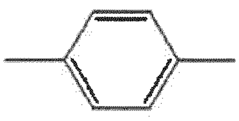 , 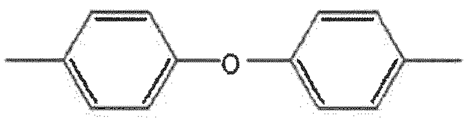 , 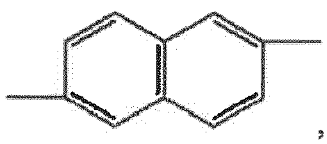 ,

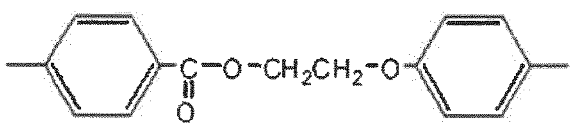 , 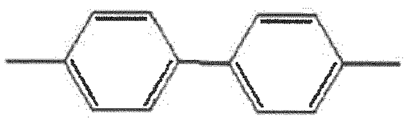

The liquid crystal polyester would preferably be a combination having a naphthalene skeleton as a structural unit. The liquid crystal polyester more preferably include a structural unit (A) derived from hydroxybenzoic acid and a structural unit (B) derived from hydroxynaphthoic acid. For example, the structural unit (A) may include formula (A) below, and the structural unit (B) may include formula (B) below. In order to improve melt moldability, the ratio of structural unit (A) to structural unit (B) may be preferably in the range from 9/1 to 1/1, more preferably from 7/1 to 1/1, and still more preferably from 5/1 to 1/1.

[Chemical Formula 2]

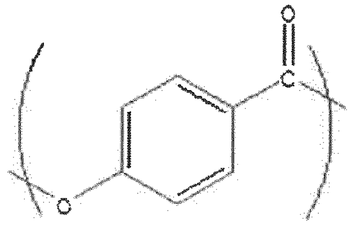

... (A)

[Chemical Formula 3]

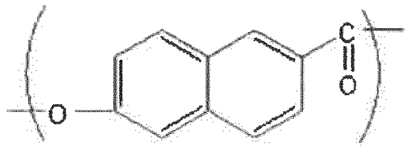

... (B)

The total content of the structural unit (A) and the structural unit (B) in all of the structural units of the liquid crystal polyester may be, for example, 65 mol percent or more, more preferably 70 mol percent or more, and still more preferably 80 mol percent or more. In one preferred embodiment, a liquid crystal polyester is a polymer containing from 4 mol percent to 45 mol percent of the structural unit (B).

The melting point (in some cases, hereinafter referred to as "Mp") of the suitable liquid crystal polyester multifilament in the present invention is preferably within a range from 220°C to 380°C, and more preferably from 260°C to 340°C. The melting point means the main absorption peak temperature that is observed, upon being measured with a differential scanning calorimeter ("DSC") ("DSC-60A" manufactured by Shimadzu Corporation) in accordance with the JIS K 7121 test method. Specifically, a sample (1 mg to 10 mg) is taken in the DSC apparatus, and is enclosed in an aluminum pan. Then, 100 cc per min of nitrogen is supplied as a carrier gas, and the endothermic peak is measured when the temperature is raised by 20°C per minute. Depending on the type of polymer, if a clear peak does not appear at 1st run in the DSC measurement, the temperature should be raised to a temperature that is 50°C higher than the expected flow temperature at a rate of temperature rising by 50°C per minute, the polymer should be completely melted at that temperature for three minutes and then cooled to 50°C at a rate of temperature falling by 80°C per minute, and thereafter, the endothermic peak should be measured at a rate of temperature rising by 20°C per minute.

In addition, thermoplastic polymers such as polyethylene terephthalate, modified polyethylene terephthalate, polyolefin, polycarbonate, polyamide, polyphenylene sulfide, polyether ether ketone, and fluorocarbon resin may be added to the liquid crystal polyester above to an extent that does not impede the effects of the present invention. Furthermore, the liquid crystal polyester may also contain: inorganic materials such as titanium oxide, kaolin, silica, barium oxide; colorants such as carbon black, dyes and pigments; and additives such as antioxidants, ultraviolet ray absorbents, and light stabilizers.

As the liquid crystal polyester multifilament of the present invention, the filaments obtained by melt spinning can be used. The melt spinning can be performed by a known or ordinary process. For example, the liquid crystal polyester multifilament can be obtained by forming a multifilament from melting resin collected from an extruder and discharging it from a nozzle at a predetermined spinning temperature.

The single filament fineness of the liquid crystal polyester multifilament of the present invention is preferably 0.5 dtex or more and 50 dtex or less. If the single filament fineness is below its lower limit, a single yarn breakage may easily occur when tension is applied to the multifilament in a region in front of, and behind, a furnace at room temperature during the transfer and heat treatment. If the single filament fineness is above its upper limit, heat is less likely to be

transferred to the interiors of single yarns. Thus, solid phase polymerization may take time, or the multifilament may have low tensile strength. The lower limit of the single filament fineness is more preferably 1 dtex or more, and still more preferably 1.5 dtex or more. The upper limit of the single filament fineness is more preferably 15 dtex or less, and still more preferably 10 dtex or less.

The total fineness of the liquid crystal polyester multifilament of the present invention is preferably 10 dtex or more and 50000 dtex or less. If the total fineness is below its lower limit, the multifilament may be easily broken under tension applied to the multifilament in the furnace during the transfer and heat treatment. This may make it difficult to raise the temperature of the multifilament to a temperature required for the progress of solid phase polymerization. If the total fineness is above its upper limit, heat is less likely to be transferred to inner filaments of the multifilament. Thus, solid phase polymerization may take time, or the multifilament may have low tensile strength. The lower limit of the total fineness is more preferably 15 dtex or more, and still more preferably 25 dtex or more. The upper limit of the total fineness is more preferably 30000 dtex or less, and still more preferably 10000 dtex or less.

The liquid crystal polyester multifilament of the present invention can be aligned and used as a tow. The tow thickness is preferably 0.1 mm or more and 10 mm or less. The lower limit of the tow thickness is more preferably 0.2 mm or more, and still more preferably 0.3 mm or more. The upper limit of the tow thickness is more preferably 5 mm or less, and still more preferably 3 mm or less.

The liquid crystal polyester multifilament of the present invention can be obtained, for example, if spun raw yarns for the liquid crystal polyester multifilament undergo heat treatment while being continuously transferred, and thus undergo solid phase polymerization. The spun raw yarns for the liquid crystal polyester multifilament generally have a tensile strength of 12 cN/dtex or less. Thus, the solid phase polymerization under appropriate conditions that allow the tensile strength ratio of the liquid crystal polyester multifilament between before and after the heat treatment to be 1.5 or more times can improve the tensile strength of the liquid crystal polyester multifilament.

The "tensile strength ratio of the liquid crystal polyester multifilament between before and after the heat treatment" as used herein refers to a value obtained by dividing the tensile strength of the liquid crystal polyester multifilament that has undergone the heat treatment by the tensile strength of the liquid crystal polyester multifilament that is yet to undergo the heat treatment.

The transfer process during the heat treatment may be either a contact transfer process (such as a process using a conveyor, a process using support rolls, and a process in which heat treatment is performed on a heated roller) or a non-contact transfer process (such as a roll-to-roll process). The treatment path does not have to be straight. A return roller or a guide may be disposed in an associated apparatus to appropriately change the length, angle, curvature, and other elements of the treatment path for the heat treatment.

To prevent fusion, the heat treatment temperature needs to be equal to or lower than the melting point of the liquid crystal polyester multifilament to undergo the heat treatment. However, the melting point of the liquid crystal polyester multifilament increases with the progress of the solid phase polymerization. Thus, increasing the heat treatment temperature in stages in accordance with the state of progress of the solid phase polymerization allows the heat treatment to be performed at higher temperatures than if the heat treatment is performed at a fixed temperature. In one preferred embodiment, the heat treatment temperature is increased in stages or successively over time, because this increase can prevent fusion and enhance the time efficiency of solid phase polymerization.

The method of applying heat treatment may be a well-known method, for example, the atmospheric heating method or the direct contact heating. As the atmosphere, air, an inert gas (for example, nitrogen or argon), or a combination of them, for example, may be suitably used. The heat treatment may be performed under a reduced pressure.

Here, as described above, the known solid phase polymerization method in which a filament package wound on a bobbin undergoes heat treatment in a batch oven causes nonuniform heat treatment resulting from the difference between inner and outer layers of the package or the difference between positions in the width direction. The resultant liquid crystal polyester multifilament has different mechanical properties along its length.

To address such problems, a method for applying uniform heat treatment to the liquid crystal polyester multifilament along its length has been studied. Such studies have showed that if, while being continuously transferred at a predetermined extension ratio, the spun raw yarns for the liquid crystal polyester multifilament undergo heat treatment at a temperature equal to or lower than the melting point so that the tensile strength ratio between before and after the heat treatment is greater than or equal to a certain ratio, all portions into which the length of the multifilament is divided undergo heat treatment at the same heat treatment temperature and under the same atmosphere displacement efficiency, thus reducing the variations in the mechanical properties of the resultant liquid crystal polyester multifilament.

What is important in heat treatment is that single filaments forming the liquid crystal polyester multifilament should be transferred and simultaneously undergo heat treatment while being elongated so that the single filaments are aligned parallel to one another without being loosened across the filament length.

Non-limiting examples of a method for this elongation include a method that allows the rotational speed of a rear drive roller to be higher than that of a front transfer roller while heat treatment is performed by a roll-to-roll process, a method in which the single filaments undergo heat treatment under a fixed load applied thereto using a dancer roller

during the transfer, a method that allows the single filaments to pass through a heated Nelson roller, and a process in which yarns are transferred, simultaneously undergo heat treatment while being fixed with a pin, and are thus elongated using the fact that filaments have a negative thermal expansion coefficient in the filament axis direction.

The extension ratio is a numerical value indicating how many times the liquid crystal polyester multifilament that has been extended is longer than the liquid crystal polyester multifilament that is yet to be extended. If the liquid crystal polyester multifilament is extended by two rollers rotating at different speeds, the extension ratio is calculated from the ratio between the rotational speeds of the two rollers. If the liquid crystal polyester multifilament is extended using an apparatus that cannot indicate the rotational speed ratio, such as using the load applied by a dancer roller, the extension ratio is calculated from the ratio of the total fineness of the multifilament that has been extended (after the heat treatment) to that of the multifilament that is yet to be extended (before the heat treatment). The extension ratio range is not limited as long as the extension of the multifilament does not cause a significant reduction in the tensile strength of the multifilament. However, in the method for manufacturing a liquid crystal polyester multifilament of the present invention, the single filaments undergo heat treatment while being continuously transferred at an extension ratio of 1.001 times to 1.200 times. The extension ratio is preferably 1.001 times to 1.100 times, and more preferably 1.003 times to 1.050 times. If the extension ratio is less than 1.001 times, the single filaments are not sufficiently extended, and cannot be thus aligned. If the extension ratio is more than 1.200 times, the tensile strength of the multifilament tends to be significantly reduced.

A stretching technology has been widely known as a technology in which filaments undergo heat treatment while being extended. However, this stretching technology increases the degree of orientation of filaments with a low degree of molecular orientation in order to improve the tensile strength and modulus of elasticity of yarns, but is not intended to be applied to originally highly oriented filaments with a higher-order structure unlike the liquid crystal polyester multifilament of the present invention. Suitable treatment conditions also vary between the stretching technology and the present invention. In the stretching technology, the extension ratio is often set to be greater than 1.200 times in order to increase the degree of orientation as much as possible, whereas in the present invention, single filaments merely need to be extended enough to be aligned. Thus, the extension ratio suitably ranges from 1.001 times to 1.200 times. If treatment is performed at a ratio exceeding the range, there is no room for an increase in the degree of orientation. This causes a defect in the higher-order structure through sliding of molecular chains and other factors. This tends to significantly reduce the tensile strength. As described above, the extension technology of the present invention should be distinguished from the stretching technology. Thus, the term "extension ratio" is used herein instead of the "stretch ratio."

The tension applied during heat treatment is preferably 0.001 cN/dtex to 0.06 cN/dtex. If the tension is below 0.001 cN/dtex, a yarn guide is not stable, and nonuniform heat treatment is performed. If the tension is above 0.06 cN/dtex, filaments tend to be broken during the heat treatment.

The structure of the oven capable of performing non-contact continuous heat treatment should not be specifically limited. The oven may be structured without a contact body between the oven inlet and outlet such that its filament transfer path is straight. Alternatively, the oven may include a filament transfer path including rollers in a furnace or on a side surface of the furnace and returned twice or more times. The return roller may be driven into rotation by itself, or may follow the transferred filaments to rotate.

In this case, to prevent fibrils and perform uniform treatment, the temperature of a portion of a roller which is arranged to return the filament transfer path which is in contact with the filaments is preferably equal to or lower than the melting point (-50°C) of the liquid crystal polyester multifilament that is yet to undergo heat treatment, and more preferably room temperature (40°C or lower).

The time required for the heat treatment should not be specifically limited in terms of the invention, and merely needs to be long enough to obtain a liquid crystal polyester multifilament having necessary properties. However, from an industrial viewpoint, it is not recommended that heat treatment take an excessively long time, because such heat treatment causes the manufacturing cost to increase. Thus, conditions, such as temperature, are appropriately set so that the time required for the heat treatment is preferably 20 hours or less, more preferably 12 hours or less, and still more preferably three hours or less.

The liquid crystal polyester multifilament of the present invention has a small variation in initial modulus, and can thus have dimensions and tension varying within a small amplitude in a processing step than a known liquid crystal polyester multifilament. As a result, good quality stability and good high-order processability are provided. Thus, such a liquid crystal polyester multifilament can be suitably used for highly processed products, such as tension members (cords and other components for various electrical appliances, such as electric wires, optical fibers, heater wire core yarns, and earphone cords), sailcloth, ropes, climbing ropes, field nets, life ropes, fishing lines, fishing nets, and longlines.

## EXAMPLES

Hereinafter, the present invention will be more specifically described in detail with reference to examples, but

the present invention is not limited to these examples. Various properties of the liquid crystal polyester multifilament of the present invention were evaluated by the following methods.

<Total Fineness and Single Filament Fineness>

In accordance with the JIS L 1013: 2010 8. 3. 1 A method, 100 m of liquid crystal polyester multifilament was wound around a sizing reel manufactured by DAIEI KAGAKU SEIKI MFG. CO., LTD. A liquid crystal polyester multifilament having a weight (g) that is 100 times greater than the wound multifilament was measured in fineness twice per level. The average of the measurement results was used as the total fineness (dtex) of the resultant liquid crystal polyester multifilament. The quotient of this value divided by the number of single filaments was defined as the single filament fineness (dtex).

<Tensile Strength and Initial Modulus>

Using Autograph AGS-100B manufactured by Shimadzu Corporation, a prepared continuous sample with a length of 50 mm underwent 50 tensile tests in total every meter in accordance with the JIS L 1013: 2010 8. 5. 1 method under constant-rate-of-extension conditions where the yarn length was 200 mm, the initial load was 0.09 cN/dtex, and the tensile speed was 100 mm/min.

The value obtained by dividing the stress at break by the total fineness was defined as the tensile strength (cN/dtex), the elongation at break was defined as the elongation (%), and the gradient of the straight line passing through two points respectively indicating elongations of 0.25% and 1.00% was defined as the initial modulus (cN/dtex). In the present invention, the tensile strength, the elongation, and the initial modulus were calculated from the respective average values in the 50 tensile tests.

<Tensile Strength Variation>

Under the same measurement conditions as those described above for the tensile strength and by the same calculation method as that described above for the tensile strength, a continuous liquid crystal polyester multifilament with a length of 50 m was measured in tensile strength as one sample 50 times. The value obtained by multiplying, by 100, the quotient of dividing the standard deviation ($\sigma_1$) of the quotients of the 50 measured tensile strengths divided by the total fineness by the average value ($A_1$) of the 50 measured tensile strengths was defined as the tensile strength variation (%).
[Formula 1]

$$\text{Tensile Strength Variation (\%)} = (\sigma_1/A_1) \times 100 \ldots (1)$$

<Initial Modulus Variation>

Under the same measurement conditions as those described above for the initial modulus and by the same calculation method as that described above for the initial modulus, a continuous liquid crystal polyester multifilament with a length of 50 m was measured in initial modulus as one sample 50 times. The value obtained by multiplying, by 100, the quotient of the standard deviation ($\sigma_2$) of the 50 measured initial moduli divided by the average value ($A_2$) of the 50 measured initial moduli was defined as the initial modulus variation (%).
[Formula 2]

$$\text{Initial Modulus Variation (\%)} = (\sigma_2/A_2) \times 100 \ldots (2)$$

(Variation in Mechanical Properties of Tension Member)

A variation in the mechanical properties of a twisted cord produced as a tension member, which is an exemplary highly processed product including the resultant liquid crystal polyester multifilament, was evaluated. Specifically, a three-strand twisted cord was produced, and the tensile strength variation and initial modulus variation of the twisted cord were numerically evaluated. More specifically, three liquid crystal polyester multifilaments of each of examples were prepared. After a tension of 50 N was applied to these multifilaments through a yarn tensioner guide, these multifilaments were twisted in one direction with a twist coefficient of 20 while being combined together, thereby producing the three-strand twisted cord. The produced twisted cord had its tensile strength variation and its initial modulus variation

measured. The measurement method is the same as that for filaments.

[Example 1]

A liquid crystal polyester multifilament (Vectran NT manufactured by Kuraray Co., Ltd., Melting Point: 281°C) having a total fineness of 1670 dtex and including 300 filaments was prepared as the spun raw yarn for use in heat treatment.

Next, as illustrated in the schematic process diagram of FIG. 1, this spun raw yarn 9 was unwound from an unwinder 1, and was rewound through the following devices a to d in this order to undergo transfer and heat treatment by a roll-to-roll process, thereby obtaining a heat-treated yarn 12 of this example.

a. First Roller 2
b. Heat Treatment Furnace 3(The heat treatment furnace 3 includes one ceramic flue 10 as a furnace flue, and a controller 11 including a heater configured to heat the atmosphere inside the flue. The furnace flue has three heating zones 6 to 8, which allow different temperature control settings.)
c. Second Roller 4
d. Winder 5

Here, the rotational speed of the first roller 2 was set such that the heat treatment time (the distance over which the yarn sample passes through the heating zones 6 to 8 of the heat treatment furnace 3 ÷ the rotational speed of the first roller 2) was equal to one hour. The rotational speed of the second roller 4 was set such that the extension ratio (the rotational speed of the second roller 4 ÷ the rotational speed of the first roller 2) was equal to 1.005 times. The heat treatment furnace internally had a nitrogen atmosphere, and the temperatures of the three heating zones 6 to 8 through which the yarn sample sequentially passed were set to be 230°C, 260°C, and 290°C, respectively. To adjust the height of a yarn guide and other elements, a ceramic roller and a ceramic guide each having a surface with matte finish (both not shown) were used as appropriate. Table 5 shows the results of analyzing the resultant heat-treated yarn.

[Example 2]

Using the same spun raw yarn and apparatus as in Example 1, a heat-treated yarn 12 was obtained under the same conditions as in Example 1, except that the rotational speed of the second roller 4 was set such that the extension ratio was equal to 1.050 times. Table 5 shows the results of analyzing the resultant heat-treated yarn.

[Example 3]

Using the same spun raw yarn and apparatus as in Example 1, a heat-treated yarn 12 was obtained under the same conditions as in Example 1, except that the rotational speed of the second roller 4 was set such that the extension ratio was equal to 1.100 times. Table 5 shows the results of analyzing the resultant heat-treated yarn.

[Example 4]

Using the same spun raw yarn and apparatus as in Example 1, a heat-treated yarn was obtained under the same conditions as in Example 1, except that the temperatures of the three heating zones 6 to 8 of the heat treatment furnace 3 were all set to be 230°C, and that the rotational speeds of the first and second rollers 2 and 4 were set such that the heat treatment time was equal to 10 hours and the extension ratio was equal to 1.005 times. Table 5 shows the results of analyzing the resultant heat-treated yarn.

[Example 5]

Using the same spun raw yarn and apparatus as in Example 1, a heat-treated yarn was obtained under the same conditions as in Example 1, except that the rotational speeds of the first and second rollers 2 and 4 were set such that the heat treatment time was equal to 16 hours and the extension ratio was equal to 1.005 times. Table 5 shows the results of analyzing the resultant heat-treated yarn.

[Example 6]

As illustrated in the schematic process diagram of FIG. 2, a spun raw yarn 9, which is the same raw yarn as in Example 1, was unwound from an unwinder 1, and was rewound through the following devices e to h in this order to

undergo transfer and heat treatment by a roll-to-roll process, thereby obtaining a heat-treated yarn 12 of this example.

e. First Roller 2
f. Heat Treatment Furnace 3
g. Dancer Roller 13
h. Winder 5

Here, the tension of the dancer roller 13 was 50 g. In addition, the rotational speed of the first roller 2 was set such that the heat treatment time (the distance over which the yarn sample passes through the heating zones 6 to 8 of the heat treatment furnace 3 ÷ the rotational speed of the first roller 2) was equal to one hour. The heat treatment furnace internally had a nitrogen atmosphere, and the temperatures of the three heating zones 6 to 8 through which the yarn sample sequentially passed were set to be 230°C, 260°C, and 290°C, respectively. To adjust the height of a yarn guide and other elements, a ceramic roller and a ceramic guide each having a surface with matte finish (both not shown) were used as appropriate. The extension ratio calculated from the ratio of the fineness of the heat-treated yarn to the fineness of the yarn that is yet to undergo heat treatment was 1.003 times. Table 5 shows the results of analyzing the resultant heat-treated yarn.

[Example 7]

As illustrated in the schematic process diagram of FIG. 3, a spun raw yarn 9, which is the same spun raw yarn as in Example 1, was unwound from an unwinder 1, and was rewound through the following devices i to p in this order to undergo transfer and heat treatment by a roll-to-roll process, thereby obtaining a heat-treated yarn 12 of this example.

i. First Roller 2
j. First Heat Treatment Furnace 14 (The first heat treatment furnace 14 includes one ceramic flue 15 as a furnace flue and a heater 16 configured to heat the atmosphere inside the flue. The furnace flue has one heating zone.)
k. Second Roller 17
1. Second Heat Treatment Furnace 18 (The second heat treatment furnace 18 includes one ceramic flue 19 as a furnace flue and a heater 20 configured to heat the atmosphere inside the flue. The furnace flue has one heating zone.)
m. Third Roller 21
n. Third Heat Treatment Furnace 22 (The third heat treatment furnace 22 includes one ceramic flue 23 as a furnace flue and a heater 24 configured to heat the atmosphere inside the flue. The furnace flue has one heating zone.)
o. Fourth Roller 25
p. Winder 5

Here, the rotational speeds of the first to fourth rollers 2, 17, 21, and 25 were set such that the heat treatment time (the sum of "the distance over which a yarn sample passes through the furnace flue 15 of the first heat treatment furnace 14 ÷ the rotational speed of the first roller 2," "the distance over which the yarn sample passes through the furnace flue 19 of the second heat treatment furnace 18 ÷ the rotational speed of the second roller 17," and "the distance over which the yarn sample passes through the furnace flue 23 of the third heat treatment furnace 22 ÷ the rotational speed of the third roller 21") was equal to one hour, and such that the extension ratio in each of the first, second, and third heat treatment furnaces 14, 18, and 22 (the rotational speed of one of the rollers immediately behind each heat treatment furnace ÷ the rotational speed of another one of the rollers immediately in front of the heat treatment furnace) was equal to 1.015 times (In this case, the total extension ratio was 1.046 times). Each heat treatment furnace internally had a nitrogen atmosphere, and the temperatures of the first, second, and third heat treatment furnaces 14, 18, and 22 were set to be 230°C, 260°C, and 290°C, respectively. To adjust the height of a yarn guide and other elements, a ceramic roller and a ceramic guide each having a surface with matte finish (both not shown) were used as appropriate. Table 5 shows the results of analyzing the resultant heat-treated yarn.

[Comparative Example 1]

The same spun raw yarn as in Example 1 was rewound on an aluminum bobbin with a package density of 0.6 g/cm$^3$, and underwent heat treatment at 230°C to 290°C for 16 hours in a nitrogen atmosphere using a closed oven, thereby obtaining a heat-treated yarn of this comparative example by a batch method. Table 5 shows the results of analyzing the resultant heat-treated yarn.

[Comparative Example 2]

Using the same spun raw yarn and apparatus as in Example 1, a heat-treated yarn was obtained under the same conditions as in Example 1, except that the rotational speed of the second roller 4 was set such that the extension ratio was equal to 1.000 times. Table 5 shows the results of analyzing the resultant heat-treated yarn.

[Table 5]

| | Manufacturing Conditions | Property Values of Filament | | | | | | | | Property Values of Tension Member (Twisted Cord) | | | |
|---|---|---|---|---|---|---|---|---|---|---|---|---|---|
| | Extension Ratio [-] | Fineness (After Heat Treatment) [dtex] | Tensile Strength [cN/dtex] | | Tensile Strength Ratio [-] | Tensile Strength Variation [%] | Initial Modulus [cN/dtex] | Initial Modulus Variation [%] | Tensile Strength [cN/dtex] | Tensile Strength Variation [%] | Initial Modulus [cN/dtex] | Initial Modulus Variation [%] |
| | | | Before Heat Treatment | After Heat Treatment | | | | | | | | |
| Ex. 1 | 1.005 | 1660 | 9.70 | 23.4 | 2.41 | 2.2 | 509 | 2.1 | 23.0 | 1.5 | 450 | 1.4 |
| Ex. 2 | 1.050 | 1596 | 9.70 | 23.0 | 2.37 | 1.9 | 521 | 2.0 | 22.7 | 1.3 | 461 | 1.6 |
| Ex. 3 | 1.100 | 1515 | 9.70 | 19.6 | 2.02 | 1.3 | 517 | 1.1 | 18.5 | 1.0 | 456 | 0.5 |
| Ex. 4 | 1.005 | 1665 | 9.70 | 20.0 | 2.06 | 1.9 | 520 | 2.3 | 18.9 | 1.4 | 480 | 1.8 |
| Ex. 5 | 1.005 | 1667 | 9.70 | 19.2 | 1.98 | 2.0 | 528 | 2.4 | 18.2 | 1.4 | 455 | 1.9 |
| Ex. 6 | 1.003 | 1665 | 9.70 | 24.0 | 2.47 | 2.4 | 505 | 2.5 | 23.3 | 1.3 | 471 | 1.9 |
| Ex. 7 | 1.046 | 1603 | 9.70 | 23.5 | 2.42 | 1.2 | 513 | 0.9 | 22.6 | 0.9 | 464 | 0.5 |
| Com. Ex. 1 | - | 1682 | 9.70 | 24.0 | 2.47 | 4.0 | 467 | 4.6 | 22.4 | 3.0 | 420 | 4.4 |
| Com. Ex. 2 | 1.000 | 1671 | 9.70 | 23.3 | 2.40 | 3.8 | 509 | 3.3 | 21.9 | 2.9 | 457 | 3.5 |

As shown in Table 5, in the liquid crystal polyester multifilament of each of Examples 1 to 7 with an initial modulus variation of 3.0% or less and a tensile strength of 18 cN/dtex or more, the three-strand twisted cord has a smaller tensile strength variation and a smaller initial modulus variation than that of each of Comparative Examples 1 and 2. Thus, a compact, highly processed product having stable quality and a high ratio of utilization of mechanical properties is expected to be produced.

INDUSTRIAL APPLICABILITY

The liquid crystal polyester multifilament of the present invention can be suitably used as filaments for use in highly processed products, such as tension members (cords and other components for various electrical appliances, such as electric wires, optical fibers, heater wire core yarns, and earphone cords), sailcloth, ropes, climbing ropes, field nets, life ropes, fishing lines, fishing nets, and longlines.

DESCRIPTION OF REFERENCE CHARACTERS

| | |
|---|---|
| 1 | Unwinder |
| 2 | First Roller |
| 3 | Heat Treatment Furnace |
| 4 | Second Roller |
| 5 | Winder |
| 6 to 8 | Heating Zone of Heat Treatment Furnace 3 |
| 9 | Spun Raw Yarn |
| 10 | Furnace Flue (Ceramic Flue) of Heat Treatment Furnace 3 |
| 11 | Controller of Heat Treatment Furnace 3 Including Heater |
| 12 | Heat-treated Yarn |
| 13 | Dancer Roller |
| 14 | First Heat Treatment Furnace |
| 15 | Furnace Flue (Ceramic Flue) of First Heat Treatment Furnace 14 |
| 16 | Heater of First Heat Treatment Furnace 14 |
| 17 | Second Roller |
| 18 | Second Heat Treatment Furnace |
| 19 | Furnace Flue (Ceramic Flue) of Second Heat Treatment Furnace 18 |
| 20 | Heater of Second Heat Treatment Furnace 18 |
| 21 | Third Roller |
| 22 | Third Heat Treatment Furnace |
| 23 | Furnace Flue (Ceramic Flue) of Third Heat Treatment Furnace 22 |
| 24 | Heater of Third Heat Treatment Furnace 22 |
| 25 | Fourth Roller |

## Claims

**1.** A liquid crystal polyester multifilament having an initial modulus variation of 3.0% or less and a tensile strength of 18 cN/dtex or more, wherein the initial modulus variation and the tensile strength are determined by the method disclosed in the description.

**2.** The liquid crystal polyester multifilament of claim 1, wherein
the liquid crystal polyester multifilament has a tensile strength variation of 3.0% or less.

**3.** A highly processed product comprising: the liquid crystal polyester multifilament of claim 1 or 2.

**4.** A method for manufacturing the liquid crystal polyester multifilament of claim 1 or 2, the method comprising

at least subjecting a spun raw yarn of the liquid crystal polyester multifilament to heat treatment,
the spun raw yarn undergoing the heat treatment while being transferred at an extension ratio of 1.001 times to 1.200 times.

5. The method of claim 4, wherein a tensile strength ratio of the liquid crystal polyester multifilament between before and after the heat treatment is 1.5 times or more.

6. The method of claim 4 or 5, wherein the liquid crystal polyester multifilament undergoes the heat treatment while being transferred by a roll-to-roll process.

**Patentansprüche**

1. Flüssigkristall-Polyester-Multifilament mit einer Variation des anfänglichen Moduls von 3,0% oder weniger und einer Zugfestigkeit von 18 cN/dtex oder mehr, wobei die Variation des anfänglichen Moduls und die Zugfestigkeit durch das in der Beschreibung offenbarte Verfahren bestimmt werden.

2. Flüssigkristall-Polyester-Multifilament nach Anspruch 1, wobei das Flüssigkristall-Polyester-Multifilament eine Variation der Zugfestigkeit von 3,0% oder weniger aufweist.

3. Hochverarbeitetes Produkt, umfassend: das Flüssigkristall-Polyester-Multifilament nach Anspruch 1 oder 2.

4. Verfahren zum Herstellen des Flüssigkristall-Polyester-Multifilaments nach Anspruch 1 oder 2, wobei das Verfahren umfasst

   mindestens das einer Wärmebehandlung Unterziehen eines gesponnenen Rohgarns des Flüssigkristall-Polyester-Multifilaments,
   wobei das gesponnene Rohgarn die Wärmebehandlung erfährt, während es bei einem Dehnungsverhältnis von 1,001-fach bis 1,200-fach übertragen wird.

5. Verfahren nach Anspruch 4, wobei ein Zugfestigkeitsverhältnis des Flüssigkristall-Polyester-Multifilaments zwischen vor und nach der Wärmebehandlung 1,5-fach oder mehr beträgt.

6. Verfahren nach Anspruch 4 oder 5, wobei das Flüssigkristall-Polyester-Multifilament die Wärmebehandlung erfährt, während es durch ein Rolle-zu-Rolle-Verfahren übertragen wird.

**Revendications**

1. Multifilament de polyester à cristaux liquides présentant une variation de module initial de 3,0% ou moins et une résistance à la traction de 18 cN/dtex ou plus, dans lequel la variation de module initial et la résistance à la traction sont déterminées par le procédé divulgué dans la description.

2. Multifilament de polyester à cristaux liquides selon la revendication 1, dans lequel le multifilament de polyester à cristaux liquides présente une variation de résistance à la traction de 3,0% ou moins.

3. Produit hautement transformé comprenant : le multifilament de polyester à cristaux liquides selon la revendication 1 ou 2.

4. Procédé de fabrication du multifilament de polyester à cristaux liquides selon la revendication 1 ou 2, comprenant

   au moins la soumission d'un fil brut filé du multifilament de polyester à cristaux liquides à un traitement thermique,
   le fil brut filé subissant le traitement thermique tout en étant transféré à un taux d'extension de 1,001 fois à 1,200 fois.

5. Procédé selon la revendication 4, dans lequel un rapport de résistance à la traction du multifilament de polyester à cristaux liquides entre avant et après le traitement thermique, est de 1,5 fois ou plus.

6. Procédé selon la revendication 4 ou 5, dans lequel le multifilament de polyester à cristaux liquides subit le traitement thermique tout en étant transféré par un procédé de rouleau à rouleau.

FIG.1

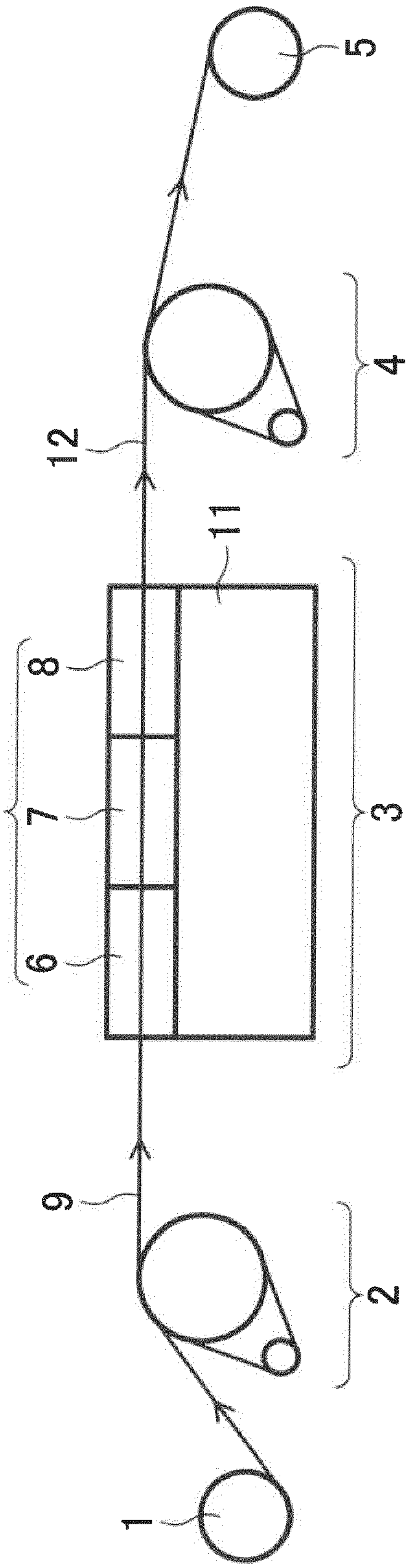

FIG.2

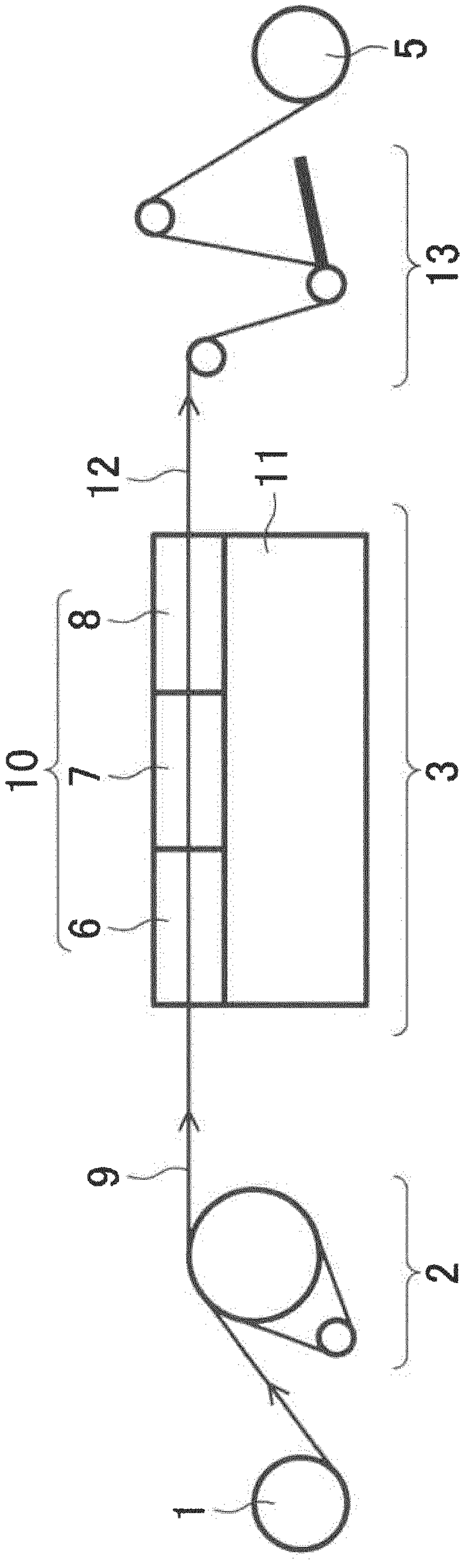

FIG.3

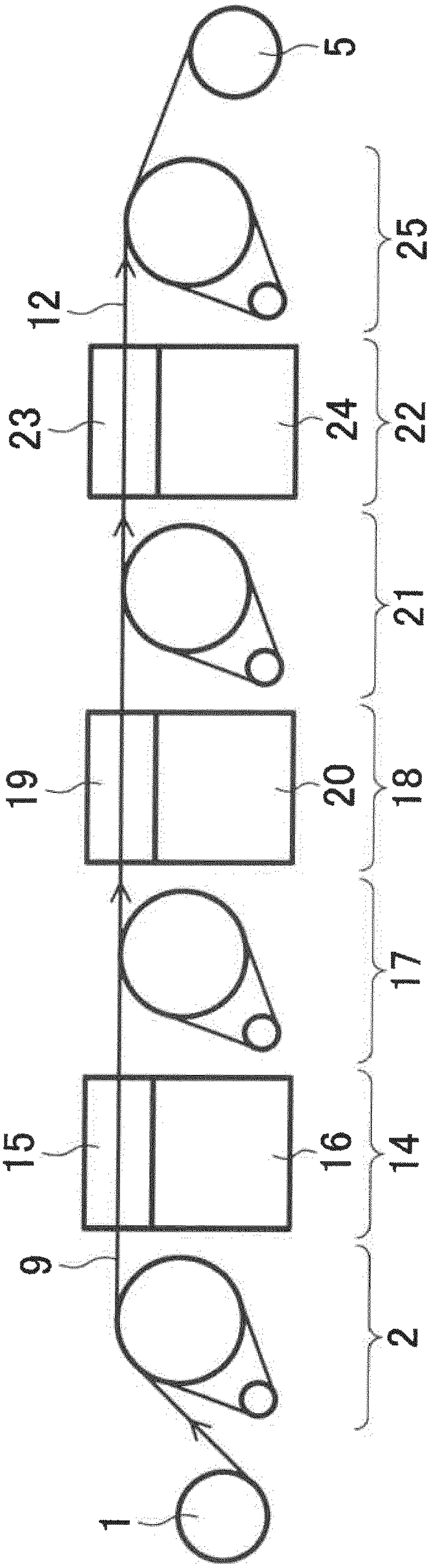

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016176161 A
- JP 2017179647 A
- JP S6245726 A